# EUROPEAN PATENT APPLICATION

(11) **EP 1 445 616 A1**
(43) Date of publication of application: **11.08.2004**
(21) Application number: 02760689.6
(22) Date of filing: 22.08.2002
(51) Int. Cl.: G01N 37/00, G01N 33/53, G01N 33/543, G01N 21/01, G01N 21/03, G01N 21/64

(54) **SUBSTRATE HAVING LIGANDS IMMOBILIZED THEREON**

(30) Priority: 22.08.2001 JP 2001250974
(71) Applicant: TAKARA BIO INC., Otsu-shi, Shiga 520-2193 (JP)
(72) Inventor: OHMI, Tadahiro, Sendai-shi, Miyagi 980-0813 (JP); KATO, Ikunoshin, Uji-shi, Kyoto 611-0028 (JP)
(74) Representative: Grund, Martin, Dr.
(86) International application number: PCT/JP2002/008444
(87) International publication number: WO 2003/019199

(57) **Abstract**

A substrate having a plural number of ligands which have been immobilized on a pre-determined region of the surface thereof, characterized in that the region on the substrate has such a shape as allowing the concentration of signals caused by binding of the ligands to receptors in the region towards the receiver.

## Description

### Technical Field

The present invention relates to a substrate having immobilized ligands and a substrate for immobilizing ligands which are used for detecting a binding of a ligand to a receptor with high sensitivity and which are useful in a field of genetic engineering.

### Background Art

Relationships between structures and activities of molecules are essential matters to be studied with regard to biological systems. Certain molecules are known to interact with and bind to other molecules. Such specific intermolecular bindings are known as relationships between receptors and ligands.

A number of methods are known for determining binding affinities between ligands and receptors (see, for example, JP-A 4-505763).

Recently, substrates having immobilized ligands in which ligands are immobilized on predetermined regions on a surface of the substrate are used for determining binding affinities between ligands and receptors. The density of ligands immobilized on the substrate is increasing and the size of the substrate is decreasing.

As a result of the increase in density and the decrease in size of the substrate having immobilized ligands, it has been desired to provide a substrate having immobilized ligands which is used for determining a binding affinity between a ligand and a receptor with good reproducibility and high sensitivity.

### Objects of Invention

The main object of the present invention is to provide a substrate having immobilized ligands and a substrate for immobilizing ligands which are used for analyzing information on bindings between various ligands and receptors therefor with extraordinarily high sensitivity and good reproducibility.

### Summary of Invention

The present invention is outlined as follows. The first aspect of the present invention relates to a substrate having immobilized ligands in which plural ligands are immobilized in predetermined regions on a surface of the substrate, wherein the shape of each of the regions on the substrate forces a signal due to a binding of the ligand to a receptor in the region to be concentrated on a receiver.

The second aspect of the present invention relates to a substrate for immobilizing ligands which is used for immobilizing plural ligands in predetermined regions on a surface of the substrate, wherein the shape of each of the regions on the substrate forces a signal due to a binding of the ligand to a receptor in the region to be concentrated on a receiver.

### Brief Description of Drawings

Figure 1 is a schematic drawing that illustrates one embodiment of the substrate having immobilized ligands of the present invention.
Figure 2 is a schematic drawing that illustrates one embodiment of an analytical apparatus for the substrate having immobilized ligands of the present invention.
Figure 3 is a schematic drawing that illustrates one embodiment of the substrate having immobilized ligands of the present invention in which a signal due to a binding of a ligand to a receptor is forced to be concentrated on a receiver.
Figure 4 is a schematic drawing that illustrates one embodiment of the substrate having immobilized ligands of the present invention in which a signal due to a binding of a ligand to a receptor is forced to be concentrated on a receiver.

### Detailed Description of the Invention

According to the present invention, the shape of the region may be a concave shape that forces a signal to be focused on a receiver. The signal may be fluorescence or luminescence from a fluorescent substance or a luminescent substance. The region is preferably coated with a material capable of reflecting signals. Although there is no specific limitation concerning the substrate capable of reflecting signals, it may be a specular material such as a metal. The region can be made by physical or chemical means. For example, the region may be formed by pressing. Alternatively, the present invention encompasses an embodiment in which a signal is forced to be concentrated on a receiver by raising the circumference of the region.

According to the present invention, the efficiency of receiving a signal due to a binding of a ligand to a receptor (e.g., fluorescence or luminescence) is increased, and the sensitivity of detecting a binding of a ligand to a receptor is remarkably increased.

The present invention provides a method for detecting a receptor in which a substrate having immobilized ligands of the present invention is used. The detection method of the present invention is particularly useful for detecting a receptor present at a trace amount.

There is no specific limitation concerning the method used for immobilizing ligands onto a substrate for immobilizing ligands provided according to the present invention. Examples thereof include a method of immobilization by electrostatic binding, a method of immobilization by covalent binding through a modified site, and a method of immobilization by synthesizing ligands on a substrate.

In one embodiment of the present invention, the ligand may be a nucleic acid, a saccharide, a peptide or a protein. The nucleic acid may be a DNA or an RNA. The DNA may be a double-stranded DNA or a single-stranded DNA. Examples of RNAs include mRNAs, fragments thereof and synthetic RNAs. Examples of DNAs include cDNAs, fragments thereof and synthetic DNAs. Furthermore, the nucleic acid may be a polynucleotide or an oligonucleotide.

There is no specific limitation concerning the ligand according to the present invention as long as it is a molecule recognized and bound by a specific receptor. For example, the ligand is a nucleic acid, a saccharide, a protein or a peptide.

Examples of the ligands include agonists and antagonists of cell membrane receptors, toxins and venoms, epitopes of viruses, hormones (e.g., sedatives, opiates and steroids), hormone receptors, peptides, enzymes, substrates for enzymes, cofactors, drugs, lectins, saccharides, oligonucleotides, polynucleotides, nucleic acids, oligosaccharides, proteins, antibodies, and monoclonal antibodies.

There is no specific limitation concerning the receptor according to the present invention as long as it is capable of binding to the corresponding ligand. It may be a naturally occurring molecule or an artificial molecule. Examples of the receptors include nucleic acids, saccharides, proteins and peptides such as enzymes, cell surface proteins (receptors), glycoproteins and antibodies. For example, the receptor may be a nucleic acid, a saccharide, a peptide or a protein that is capable of binding to a nucleic acid, a saccharide, a peptide or a protein. A receptor labeled with a fluorescent substance or a luminescent substance may be used as the receptor.

The properties of the contacting surfaces of a ligand and a receptor capable of binding to the ligand according to the present invention are complementary to each other.

It is preferable that the substrate can be used to detect a binding of a ligand to a receptor capable of binding to the ligand with high sensitivity. Examples of the substrates of the present invention include a substrate in which the distance between the ligand immobilization regions is 1 mm or more, or less than 1 mm; a substrate in which the density of the regions is less than 100 regions/cm², or 100 regions/cm² or more; a substrate in which the density of the regions is less than 10 regions/cm², or 10 regions/cm² or more; and a substrate in which the number of the regions is 100 or more, or 1000 or more.

The present invention provides a square, tape-shaped or disk-shaped substrate having plural ligands being immobilized in predetermined regions on a surface of the substrate, wherein the shape of each of the regions on the substrate forces a signal due to a binding of the ligand to a receptor in the region to be concentrated on a receiver.

As used herein, a square substrate refers to a substrate having a quadrangular shape. It may be in any form such as a regular square, a rectangle or a trapezoid. The square substrate may be made from any material as long as ligands can be immobilized in predetermined regions on a surface of the substrate.

As used herein, a tape-shaped substrate refers to a narrow, long and belt-like substrate. The tape-shaped substrate may be made from any material as long as ligands can be immobilized in predetermined regions on a surface of the substrate. A disk-shaped substrate according to the present invention is a disk-shaped substrate that may be made from any material as long as ligands can be immobilized in predetermined regions on a surface of the substrate.

Any material (porous, non-porous, etc.) may be selected for the substrate according to the present invention depending on the object.

Although it is not intended to limit the present invention, for example, it is desirable that the square substrate is made from a non-porous or porous material, and plural ligand immobilization regions are placed at physically separated positions on a surface of the substrate. For example, a non-porous material having a smooth surface can be used. Although it is not intended to limit the present invention, glass (e.g., a slide glass) can be preferably used. As for the surface of the substrate, one onto which ligands can be covalently or non-covalently immobilized, or one on which ligands can be synthesized may be used.

Any flexible or semi-flexible material may be used for the tape-shaped substrate. It is desirable that at least one surface of the substrate is substantially flat, and plural ligand immobilization regions are placed at physically separated positions on the surface. Any rigid, flexible or semi-flexible material may be preferably used for the disk-shaped substrate. It is desirable that at least one surface of the substrate is substantially flat, and plural ligand immobilization regions are placed at physically separated positions on the surface.

There is no specific limitation concerning the array of ligand immobilization sites on a surface of the square, tape-shaped or disk-shaped substrate. The array may be changed depending on the object.

For example, ligands may be spotted at density of 10 to 10000 ligands/cm² onto the square substrate, and ligands may be spotted at density of 1 to 100 ligands/cm along the short side and 1 to 100 ligands/cm along the long side onto the tape-shaped substrate. In case of the disk-shaped substrate, ligands may be spotted at density of 1 to 10000 ligands/cm².

Ligands may be conveniently spotted onto a substrate using a commercially available spotter. Certain types of ligands can be synthesized on a substrate.

There is no specific limitation concerning the signal-emitting substance used for detecting a receptor bound to a ligand according to the present invention. Examples of the signal-emitting substances include fluorescent substances and luminescent substances. For example, a chemiluminescent substance such as AMPPD or a fluorescent substance such as fluorescein, Cascade Blue, Oregon Green, BODIPY, Rhodamine Green, Alexa Fluor, Texas Red, Cy3 or Cy5 can be preferably used.

For example, the substrate used according to the present invention may be made from any material that can be used for a substrate for a DNA chip or a biosensor and that can retain DNAs to be immobilized on its surface. For example, a substrate having a hydrophilic or hydrophobic functional group on its surface can be preferably used. Examples of the functional groups include a hydroxyl group, an amino group, a thiol group, an aldehyde group, a carboxyl group and an acyl group. The substrates also include a substrate having such a functional group on its surface as a property of the material of the substrate. Even if a substrate does not have a hydrophilic or hydrophobic functional group on its surface, it may be used without limitation as long as it can be made to have such a functional group on its surface by surface treatment.

Examples of the substrates subjected to such surface treatment include a substrate having a surface treated with a commercially available silane-coupling agent such as aminoalkylsilane, with a polycation such as polylysine or polyethylenimine, or with aminoalkylsilane and glutaraldehyde.

An electrically negative, neutral or positive material may be preferably used as a material for the substrate used according to the present invention if ligands can be efficiently immobilized onto it. Furthermore, the substrate may have a dual structure consisting of a part for ligand immobilization and a part for supporting the part for ligand immobilization. The material may be selected taking the ligand immobilization efficiency and the strength of the substrate into consideration.

A part for ligand immobilization may be prepared beforehand, stuck to a part for supporting the part for ligand immobilization, and then used.

Any material may be preferably used for the substrate used according to the present invention without limitation as long as the use of the material results in sufficient reduction in background as compared with signals upon detection using a detector.

In any case, the substrate is formed such that the shape of each ligand immobilization region on the substrate forces a signal due to a binding of a ligand to a receptor to be concentrated on a receiver.

The region may be formed by micropressing using a metal material or by using a specular material which is a combination of a glass substrate and a metal material. As used herein, pressing methods include micropressing and injection molding. The shape of the region is preferably a concave shape that forces a signal to be focused on a receiver. Although there is no specific limitation concerning the diameter of the region, it is for example 20 to 2000 µm, preferably 50 to 500 µm, more preferably 100 to 200 µm.

According to the present invention, the position of the substrate relative to a detector for detecting a binding of a ligand to a receptor which contains a receiver may be one-dimensionally or two-dimensionally moved. Alternatively, the detector may be one-dimensionally or two-dimensionally moved on the substrate. Furthermore, movement of the detector and movement of the substrate may be carried out in combination.

A binding of a ligand to a receptor therefor can be determined by exposing the substrate of the present invention, which contains plural ligands, to at least one receptor (for example, a receptor labeled with a label) of which the ability to bind to the ligands is to be determined, and detecting a position of the label on the substrate. The whole substrate may be exposed to the receptor, or portions of the substrate may be successively exposed to the receptor.

Upon determination of a binding of a ligand to a receptor, the whole substrate may be subjected to detection, or portions of the substrate may be successively subjected to detection.

By using the substrate having immobilized ligands of the present invention, results can be obtained with extraordinarily high detection sensitivity (e.g., several fold to several orders of magnitude higher) even if a trace amount of a sample is used. Thus, a substrate having immobilized ligands and a substrate for immobilizing ligands which enable detection of a binding of a ligand to a receptor with extraordinarily high sensitivity are provided. Furthermore, a substrate having immobilized ligands which results in a high signal, a low signal to noise ratio and excellent reproducibility is provided.

### Examples

The following Examples further illustrate the present invention in detail but are not to be construed to limit the scope thereof.

### Example 1

### (1) Preparation of substrate

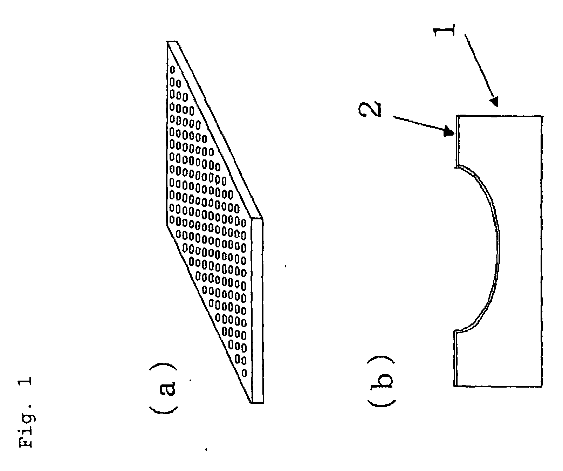

Examination was carried out using DNAs as ligands. Specifically, a substrate having immobilized ligands as shown in Figure 1 was prepared. Figure 1(a) shows a perspective view which illustrates one embodiment of the substrate having immobilized ligands of the present invention. Figure 1(b) is an enlarged drawing which illustrates a portion of one embodiment of the substrate having immobilized ligands of the present invention. The substrate having immobilized ligands as shown in Figure 1 consisted of a support substrate 1 and a surface coat 2. The support substrate was made from plastic and the surface coat was made from a metal. The support substrate was prepared by injection molding of plastic to form concavities with diameter of 200 µm and depth of 50-200 µm at a center-to-center distance of 300 µm on the surface. The surface was coated with a metal.

### (2) Immobilization of ligands

Genes influenced by endocrine disruptors were used as ligands to be immobilized. Specifically, 33 genes were selected from a group of genes that are potentially influenced by endocrine disruptors. The genes are shown in Table 1.

**Table 1**

| Gene no. | Name of immobilized gene (Gene product name) | Combination of primers (SEQ ID NO) |
|---|---|---|
| 1. | Smad3 | 1, 2 |
| 2. | VEGF receptor | 3, 4 |
| 3. | ACTR | 5, 6 |
| 4. | N-CoR/SMRT | 7, 8 |
| 5. | efp | 9,10 |
| 6. | c-Myc-1 | 11,12 |
| 7. | Vitamin D receptor | 13,14 |
| 8. | cathepsin G | commercially available |
| 9. | c-Myc-2 | 15,16 |
| 10. | Bax | 17,18 |
| 11. | JNK1 | 19,20 |
| 12. | p38 | 21,22 |
| 13. | TRIP 1 | 23,24 |
| 14. | ARA 70 | 25,26 |
| 15. | insulin receptor | 27,28 |
| 16. | NGF receptor | commercially available |
| 17. | PDGF receptor | 29,30 |
| 18. | CSF1 receptor-1 | commercially available |
| 19. | CSF1 receptor-2 | 31,32 |
| 20. | FGF receptor | 33,34 |
| 21. | p38 gamma | 35,36 |
| 22. | Bcl-X | 37,38 |
| 23. | c-Myc-3 | 39,40 |
| 24. | pS2 protein | 41,42 |
| 25. | lactoferrin | 43,44 |
| 26. | RIP 140 | 45,46 |
| 27. | TIF2 | 47, 48 |
| 28. | JNK2 | 49,50 |
| 29. | Bax delta | 51,52 |
| 30. | BMK-1 | 53,54 |
| 31. | BMK-2 | 55,56 |
| 32. | Src-1 | 57,58 |
| 33. | p300/CBP | 59,60 |
| 34. | β-actin (positive control) | 61,62 |
| 35. | pBR322 (negative control) | |

Genes selected from those listed in Table 1 or DNA fragments thereof were prepared as follows. Information on nucleotide sequences of genes (or genes for gene products) to be immobilized was obtained from GenBank in which the nucleotide sequences are registered under specific accession numbers. Primer pairs for PCR amplification were constructed based on the information. OLIGO™ Primer Analysis Software (Takara Shuzo) was used for the construction setting the parameters of the software to result in DNA fragments of about 100 b to about 1 kb, which are optimal for the method of the present invention. Primers were then synthesized using a DNA synthesizer according to the designed nucleotide sequences. As for cathepsin G, NGF receptor and CSF1 receptor genes, primers for the respective genes contained in Human UniGene DNA set (Research Genetics) were used. The primers were modified to have mercaptohexyl groups at the 5' ends.

PCR-amplified fragments of interest were obtained according to a standard protocol attached to a commercially available PCR kit using the primer pairs as well as a genomic DNA, a genomic DNA library or a cDNA library as a template. The thus obtained DNA fragments were purified using SUPREC-02 (Takara Shuzo). Nucleotide sequences of the amplified cDNAs were analyzed to determine if they were the fragments of interest. Each of the amplified fragments was recovered by ethanol precipitation and dissolved at a concentration of 1 µM in 100 mM carbonate buffer (pH 9.5). In addition, a housekeeping gene, β-actin gene, as a positive control was prepared in a similar manner. A plasmid pBR322 DNA was used as a negative control.

Five serial dilutions were prepared for each of the purified DNA fragments as follows such that each dilution contained the DNA fragment at concentrations ranging from 0.1 to 0.5 mg/ml. A portion of the purified DNA fragment was dissolved in 50 mM carbonate buffer (pH 9.5), and the absorbance at 260 nm was measured to determine the concentration. Using GMS 417 Arrayer (Genetic Microsystems, GMS), the solutions of DNAs having mercaptohexyl groups at the 5' ends prepared as described above were spotted to the centers of the concavities on the substrate for immobilizing ligands prepared in (1) above. 5 serial dilutions of 35 DNA fragments were spotted (35 x 5 = 175 spots). The substrate having the spotted DNA fragments was allowed to stand at room temperature for two hours, washed in ultrapure water and air-dried. Thus, the DNA array of the present invention was prepared.

### (3) Preparation of target nucleic acid to be hybridized

Human breast cancer MCF-7 cells were grown in DME medium containing 10% fetal bovine serum (FBS). After trypsinization, 2 x 10⁶ cells were placed in a 10-cm dish. The cells were cultured for 24 hours in DME medium containing 5% fetal bovine serum from which steroid hormones had been removed by treatment with activated carbon-dextran. After the medium was removed, the cells were cultured for 2 hours in the same medium containing diethylstilbestrol (DES) at a concentration of 10 nM. Cells cultured in a similar manner in the absence of the chemical substance were prepared as a control. Total RNAs were prepared using TRIzol reagent (Gibco-BRL) from the respective cells recovered after treatments.

The total RNA prepared in (3) above was treated with DNase. 12 µl of a reaction mixture containing about 100 to about 300 µg of the total RNA, 10 µl of 10 x AMV buffer (Life Sciences) and 10 U of DNaseI (Takara Shuzo) was prepared, incubated at 37°C for 10 minutes, and subjected to two rounds of phenol-chloroform extraction followed by ethanol precipitation. The concentration was determined using a portion of the resulting total RNA.

A reverse transcription reaction was carried out using the total RNA prepared as described above. The compositions of the reaction mixtures are shown below:
Reaction mixture A: about 130 µg of the total RNA, 10 µg of an oligo(dT) primer (Takara Shuzo) and 20 µl of water treated with diethylpyrocarbonate (DEPC, Wako Pure Chemical Industries); and
Reaction mixture B: 12 µl of 5 x AMV RTase buffer (Life Sciences), 0.5 mM each of dATP, dCTP and dGTP, 0.2 mM of dTTP, 60 U of RNase inhibitor (Takara Shuzo), 0.1 mM of Cy3-labeled dUTP (Amersham Pharmacia).

The reaction mixture A was incubated at 70°C for 10 minutes, and then cooled on ice bath. The reaction mixture B was added thereto, and the resulting mixture was incubated at 42°C for 5 minutes. About 60 U of AMV RTase (Life Sciences) was further added thereto. The RT reaction mixture (a total reaction volume of 60 µl) was incubated at 42°C for 70 minutes. 7.5 µl of 500 mM EDTA solution and 15 µl of 1 M sodium hydroxide were added to the reaction mixture. The resulting mixture was incubated at 60°C for 1 hour to degrade the template RNA. After cooling to room temperature, 37.5 µl of 1 M tris-hydrochloride (pH 7.5) was added thereto. The resulting solution was concentrated using Microcon™-30 (Millipore) to a volume of 20 µl. After adding 200 µl of 10 mM tris-hydrochloride containing 1 mM EDTA thereto, the mixture was concentrated to a volume of 20 µl again. This Cy3-labeled cDNA solution was used for hybridization below.

### (4) Hybridization

The substrate having immobilized ligands prepared as described in (2) above was subjected to permeation with 2 x SSC for 1 minute, and then subjected to prehybridization in a solution containing 4 x SSC, 0.2% SDS and 100 µg/ml salmon sperm DNA at 40°C for 1 hour. Next, the DNA array on the substrate was incubated at 40°C overnight in a hybridization solution. The hybridization solution was prepared by heat-denaturing the Cy3-labeled target DNA prepared in (3) above and suspending it at a concentration of about 10 µg/ml in a solution containing 4 x SSC, 0.2% SDS and 100 µg/ml salmon sperm DNA. After hybridization, the substrate was washed twice in a solution containing 2 x SSC and 0.1% SDS at room temperature for 5 minutes, followed by twice in solution containing 0.1 x SSC and 0.1% SDS at 68°C for 15 minutes.

### (5) Detection

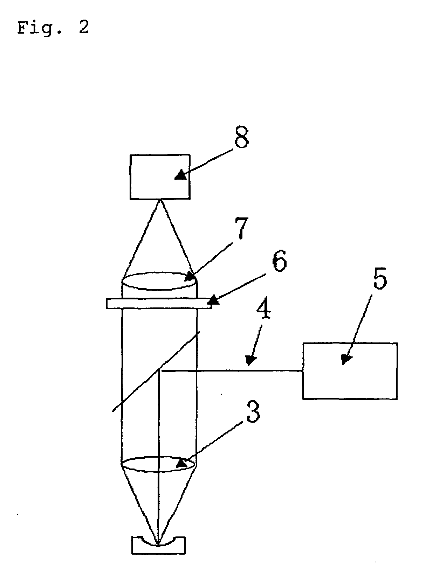

After the above-mentioned treatments, the microarray was subjected to analyses using a fluorescence scanner according to the present invention. A schematic drawing thereof is shown in Figure 2. Figure 2 illustrates an example of a fluorescence detector for detecting a fluoresce-labeled probe hybridized on the substrate having immobilized ligands (**3**: lens; **4**: irradiation laser; **5**: laser source; **6**: optical filter; **7**: lens; **8**: detector).

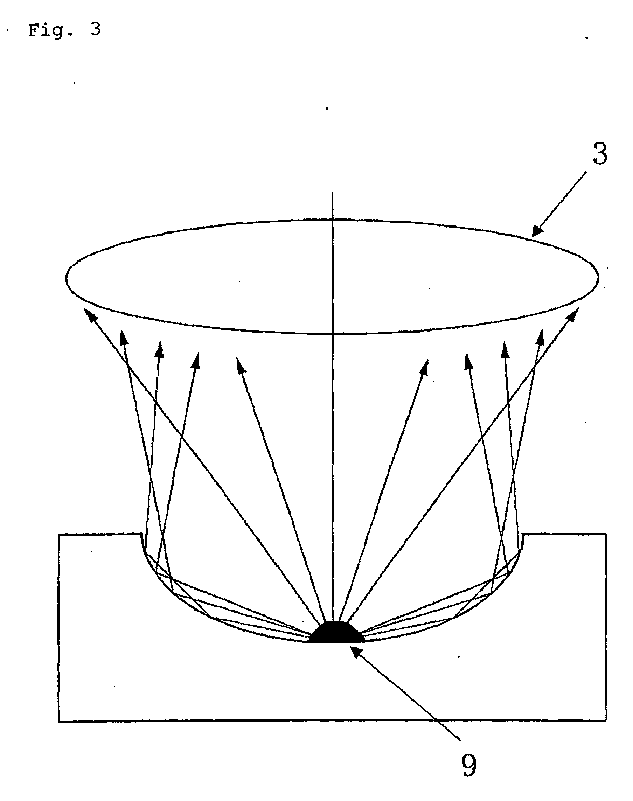

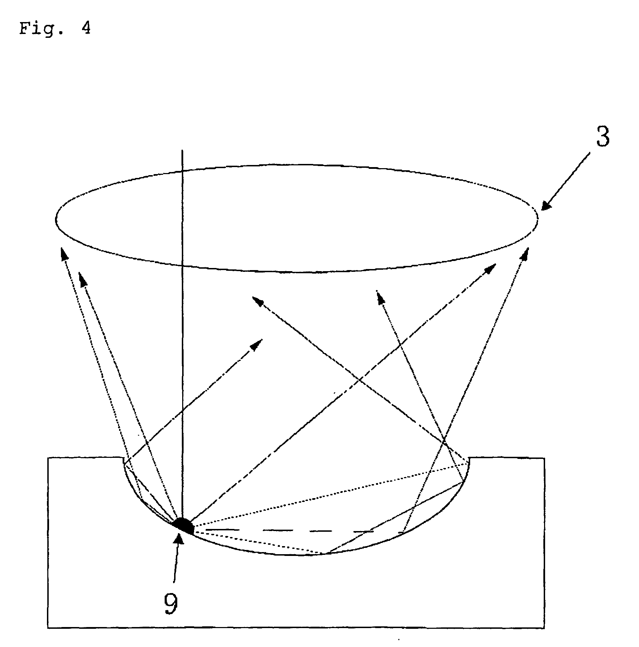

The principle of concentration of fluorescent rays emitted from a fluorescent substance on the substrate having immobilized ligands is schematically illustrated in Figures 3 and 4. In Figures 3 and 4, "**9**" represents the fluorescent substance on the substrate having immobilized ligands. Fluorescence rays are emitted from the fluorescent substance omnidirectionally. By using the substrate having immobilized ligands of the present invention, the fluorescent rays emitted from the fluorescent substance in directions other than the direction towards the lens **3** are reflected on the concavities on the substrate having immobilized ligands such that they are concentrated on the lens **3**.

As a result of fluorescence scanning, it was confirmed that the signal intensity was increased using the substrate having immobilized ligands of the present invention as compared with a DNA microarray prepared according to a conventional method.

### Industrial Applicability

The substrate having immobilized ligands of the present invention is one in which plural ligands are immobilized in predetermined regions on a surface of the substrate, wherein the shape of each of the regions on the substrate forces a signal due to a binding of the ligand to a receptor in the region to be concentrated on a receiver. By using the substrate, results can be obtained with extraordinarily high detection sensitivity even if a trace amount of a sample is used. Furthermore, it is possible to obtain analytical results with a high signal, a low signal to noise ratio and excellent reproducibility using the substrate.

### Sequence Listing Free Text

SEQ ID NO: 1: Designed oligonucleotide primer for amplifying a portion of Smad3 gene.
SEQ ID NO: 2: Designed oligonucleotide primer for amplifying a portion of Smad3 gene.
SEQ ID NO: 3: Designed oligonucleotide primer for amplifying a portion of VEGF receptor gene.
SEQ ID NO: 4: Designed oligonucleotide primer for amplifying a portion of VEGF receptor gene.
SEQ ID NO: 5: Designed oligonucleotide primer for amplifying a portion of ACTR gene.
SEQ ID NO: 6: Designed oligonucleotide primer for amplifying a portion of ACTR gene.
SEQ ID NO: 7: Designed oligonucleotide primer for amplifying a portion of N-CoR/SMRT gene.
SEQ ID NO: 8: Designed oligonucleotide primer for amplifying a portion of N-CoR/SMRT gene.
SEQ ID NO: 9: Designed oligonucleotide primer for amplifying a portion of efp gene.
SEQ ID NO: 10: Designed oligonucleotide primer for amplifying a portion of efp gene.
SEQ ID NO: 11: Designed oligonucleotide primer for amplifying a portion of c-Myc-1 gene.
SEQ ID NO: 12: Designed oligonucleotide primer for amplifying a portion of c-Myc-1 gene.
SEQ ID NO: 13: Designed oligonucleotide primer for amplifying a portion of vitamin D receptor gene.
SEQ ID NO: 14: Designed oligonucleotide primer for amplifying a portion of vitamin D receptor gene.
SEQ ID NO: 15: Designed oligonucleotide primer for amplifying a portion of c-Myc-2 gene.
SEQ ID NO: 16: Designed oligonucleotide primer for amplifying a portion of c-Myc-2 gene.
SEQ ID NO: 17: Designed oligonucleotide primer for amplifying a portion of Bax gene.
SEQ ID NO: 18: Designed oligonucleotide primer for amplifying a portion of Bax gene.
SEQ ID NO: 19: Designed oligonucleotide primer for amplifying a portion of JNK1 gene.
SEQ ID NO: 20: Designed oligonucleotide primer for amplifying a portion of JNK1 gene.
SEQ ID NO: 21: Designed oligonucleotide primer for amplifying a portion of p38 gene.
SEQ ID NO: 22: Designed oligonucleotide primer for amplifying a portion of p38 gene.
SEQ ID NO: 23: Designed oligonucleotide primer for amplifying a portion of TRIP 1 gene.
SEQ ID NO: 24: Designed oligonucleotide primer for amplifying a portion of TRIP 1 gene.
SEQ ID NO: 25: Designed oligonucleotide primer for amplifying a portion of ARA 70 gene.
SEQ ID NO: 26: Designed oligonucleotide primer for amplifying a portion of ARA 70 gene.
SEQ ID NO: 27: Designed oligonucleotide primer for amplifying a portion of insulin receptor gene.
SEQ ID NO: 28: Designed oligonucleotide primer for amplifying a portion of insulin receptor gene.
SEQ ID NO: 29: Designed oligonucleotide primer for amplifying a portion of PDGF receptor gene.
SEQ ID NO: 30: Designed oligonucleotide primer for amplifying a portion of PDGF receptor gene.
SEQ ID NO: 31: Designed oligonucleotide primer for amplifying a portion of CSF1 receptor-2 gene.
SEQ ID NO: 32: Designed oligonucleotide primer for amplifying a portion of CSF1 receptor-2 gene.
SEQ ID NO: 33: Designed oligonucleotide primer for amplifying a portion of FGF receptor gene.
SEQ ID NO: 34: Designed oligonucleotide primer for amplifying a portion of FGF receptor gene.
SEQ ID NO: 35: Designed oligonucleotide primer for amplifying a portion of p38 gamma gene.
SEQ ID NO: 36: Designed oligonucleotide primer for amplifying a portion of p38 gamma gene.
SEQ ID NO: 37: Designed oligonucleotide primer for amplifying a portion of Bcl-X gene.
SEQ ID NO: 38: Designed oligonucleotide primer for amplifying a portion of Bcl-X gene.
SEQ ID NO: 39: Designed oligonucleotide primer for amplifying a portion of c-Myc-3 gene.
SEQ ID NO: 40: Designed oligonucleotide primer for amplifying a portion of c-Myc-3 gene.
SEQ ID NO: 41: Designed oligonucleotide primer for amplifying a portion of pS2 protein gene.
SEQ ID NO: 42: Designed oligonucleotide primer for amplifying a portion of pS2 protein gene.
SEQ ID NO: 43: Designed oligonucleotide primer for amplifying a portion of lactoferrin gene.
SEQ ID NO: 44: Designed oligonucleotide primer for amplifying a portion of lactoferrin gene.
SEQ ID NO: 45: Designed oligonucleotide primer for amplifying a portion of RIP 140 gene.
SEQ ID NO: 46: Designed oligonucleotide primer for amplifying a portion of RIP 140 gene.
SEQ ID NO: 47: Designed oligonucleotide primer for amplifying a portion of TIF2 gene.
SEQ ID NO: 48: Designed oligonucleotide primer for amplifying a portion of TIF2 gene.
SEQ ID NO: 49: Designed oligonucleotide primer for amplifying a portion of JNK2 gene.
SEQ ID NO: 50: Designed oligonucleotide primer for amplifying a portion of JNK2 gene.
SEQ ID NO: 51: Designed oligonucleotide primer for amplifying a portion of Bax delta gene.
SEQ ID NO: 52: Designed oligonucleotide primer for amplifying a portion of Bax delta gene.
SEQ ID NO: 53: Designed oligonucleotide primer for amplifying a portion of BMK-1 gene.
SEQ ID NO: 54: Designed oligonucleotide primer for amplifying a portion of BMK-1 gene.
SEQ ID NO: 55: Designed oligonucleotide primer for amplifying a portion of BMK-2 gene.
SEQ ID NO: 56: Designed oligonucleotide primer for amplifying a portion of BMK-2 gene.
SEQ ID NO: 57: Designed oligonucleotide primer for amplifying a portion of Src-1 gene.
SEQ ID NO: 58: Designed oligonucleotide primer for amplifying a portion of Src-1 gene.
SEQ ID NO: 59: Designed oligonucleotide primer for amplifying a portion of p300/CBP gene.
SEQ ID NO: 60: Designed oligonucleotide primer for amplifying a portion of p300/CBP gene.
SEQ ID NO: 61: Designed oligonucleotide primer for amplifying a portion of β-actin gene.
SEQ ID NO: 62: Designed oligonucleotide primer for amplifying a portion of β-actin gene.

## Claims

1. A substrate having immobilized ligands in which plural ligands are immobilized in predetermined regions on a surface of the substrate, wherein the shape of each of the regions on the substrate forces a signal due to a binding of the ligand to a receptor in the region to be concentrated on a receiver.

2. The substrate having immobilized ligands according claim 1, wherein the shape of each of the regions is a concave shape that forces the signal to be focused on the receiver.

3. The substrate having immobilized ligands according to claim 1, wherein the signal is fluorescence or luminescence.

4. The substrate having immobilized ligands according to claim 1, wherein each of the regions is coated with a material capable of reflecting signals.

5. The substrate having immobilized ligands according to claim 4, wherein the substrate capable of reflecting signals is a specular material.

6. The substrate having immobilized ligands according to claim 4, wherein the substrate capable of reflecting signals is a metal.

7. The substrate having immobilized ligands according claim 1, wherein each of the regions is formed by pressing.

8. A substrate for immobilizing ligands which is used for immobilizing plural ligands in predetermined regions on a surface of the substrate, wherein the shape of each of the regions on the substrate forces a signal due to a binding of the ligand to a receptor in the region to be concentrated on a receiver.

9. The substrate for immobilizing ligands according claim 8, wherein the shape of each of the regions is a concave shape that forces the signal to be focused on the receiver.

10. The substrate for immobilizing ligands according to claim 8, wherein the signal is fluorescence or luminescence.

11. The substrate for immobilizing ligands according to claim 8, wherein each of the regions is coated with a material capable of reflecting signals.

12. The substrate for immobilizing ligands according to claim 11, wherein the substrate capable of reflecting signals is a specular material.

13. The substrate for immobilizing ligands according to claim 11, wherein the substrate capable of reflecting signals is a metal.

14. The substrate for immobilizing ligands according claim 8, wherein each of the regions is formed by pressing.
